# EUROPÄISCHE PATENTSCHRIFT

(11) **EP 4 470 699 B1**
(45) Veröffentlichungstag und Bekanntmachung des Hinweises auf die Patenterteilung: **05.11.2025**
(21) Anmeldenummer: 23176825.0
(22) Anmeldetag: 01.06.2023
(51) Int. Cl.: B23F 21/03, B23P 15/28, B24D 3/22, B23F 19/05, B23P 15/14, B24B 33/08, B24D 18/00

(54) **HONRING UND VERFAHREN ZUR HERSTELLUNG DES HONRINGS**
HONING RING AND METHOD FOR PRODUCING THE HONING RING
BAGUE DE RODAGE ET PROCÉDÉ DE FABRICATION DE LA BAGUE DE RODAGE

(43) Veröffentlichungstag der Anmeldung: 04.12.2024
(73) Patentinhaber: Krebs & Riedel Schleifscheibenfabrik GmbH & Co. KG, 34385 Bad Karlshafen (DE)
(72) Erfinder: Weber, Steffen, 37671 Höxter (DE)
(74) Vertreter: Ter Meer Steinmeister & Partner

(56) Entgegenhaltungen:
- EP-A1- 3 760 369
- EP-B1- 1 030 757
- WO-A1-2022/084199
- AT-B- 414 104
- DE-A1- 2 304 398
- US-A- 3 183 633
- US-A- 4 048 765
- US-A1- 2004 176 019

## Beschreibung

Die Erfindung betrifft einen Honring und ein Verfahren zur Herstellung des Honrings.

### Hintergrund

Das Verzahnungshonen ist ein Hartfeinbearbeitungsverfahren zur Oberflächenbearbeitung von Verzahnungskomponenten, insbesondere Zahnrädern, das beispielsweise in der Herstellung von Getrieben eingesetzt wird.

EP 3 760 369 A1 beschreibt einen Honring zur Oberflächenbearbeitung verzahnter Werkstücke, umfassend einen ringförmigen Körper aus Keramik, in welchen Schleifmittel eingebettet ist, und welcher an einer Innenmantelfläche eine mit dem verzahnten Werkstück in Kontakt bringbare Verzahnung hat, wobei der ringförmige Körper aus Keramik in einer radialen Richtung von wenigstens einem Außenring umgeben ist, welcher im Wesentlichen aus wenigstens einem Kunstharz besteht und eine Außenringdicke von mehr als 15 mm aufweist.

US 3 183 633 A beschreibt ein zahnradförmiges Schleifwerkzeug zur Endbearbeitung von Werkstücken. Das Schleifwerkzeug umfasst eine zentrale Nabe aus Kunststoff oder Metall mit einer durchgehenden Welle oder einer Bohrung zur drehbaren Montage des Schleifwerkzeugs auf einer Spindel. Der Randabschnitt des Werkzeugs ist mit einer Vielzahl von Zähnen ausgebildet, die aus einer Schleifmatrix bestehen, die aus einem PolyurethanharzBindemittel und einer Vielzahl darin dispergierter und fest gebundener Schleifkörner besteht. Die Schleifmatrix ist fest mit dem Umfangsabschnitt der Nabe verbunden. Zum Herstellen des Schleifwerkzeugs wird eine Mischung aus Schleifkörnern und einer Polyurethan-Reaktionsmischung vermischt und in einer Form an die Nabe angegossen.

US 4 048 765 A beschreibt ein Endbearbeitungsrad zum Polieren von Werkstücken aus einer Polyurethanmatrix, in der ein kleinerer Volumenanteil fein verteilter Schleifkörner gleichmäßig verteilt ist. Das Endbearbeitungsrad enthält eine Reihe flacher, axial beabstandeter, ringförmiger Faserverstärkungselemente, die in die Matrix 2 eingebettet sind.

AT 414 104 B beschreibt einen Verbundhonring, bestehend aus einem Honteil und einem Trägerteil, wobei der Honteil niedrige Porosität aufweist, der Trägerteil eine höhere Elastizität als der Honteil aufweist, und der Honteil zusätzlich zu einem Schleifkörneranteil einen Kompositschleifkörneranteil aufweist.

EP 1 030 757 B1 beschreibt einen Verbundhonring, der einen schleifaktiven Honringteil mit niedriger Porosität sowie einen Trägerteil, der eine höhere Elastizität als der schleifaktive Honringteil aufweist, umfasst.

US 2004/0176019 A1 beschreibt einen Kunstharz-Schleifstein, der einen Hauptkörper mit einer Schleifstruktur umfasst, in der Schleifagglomerate durch ein Bindemittel zusammengehalten werden.

DE 2 304 398 A1 beschreibt ein Honwerkzeug, hergestellt aus zusammengefügten synthetischen Polymerisatkomponenten, beispielsweise aus einer gemeinsam gehärteten Mischung aus mindestens einer Polyurethankautschukkomponente und mindestens einem Epoxidharz, wobei Schleifmittelteilchen in dem Honwerkzeug dispergiert bzw. fein verteilt werden.

WO 2022/084199 A1 beschreibt ein Verfahren für Bearbeitung einer Verzahnung eines metallischen Werkstücks, bei dem eine Zahnflanke der Verzahnung mit einem oder mehreren dazu zugestellten Bearbeitungswerkzeugen mit aus in einer Bindungsmatrix eingelagerten Schneidkörnern geometrisch unbestimmter Schneide hart-feinbearbeitet wird, sowie ein Verzahnungswerkzeug und eine Werkzeugmaschine dafür. Beschrieben wird ein Bearbeitungswerkzeug in Form einer Schleifschnecke. Bei dem schneckenförmigen Werkzeug handelt es sich um ein Kombiwerkzeug mit zwei miteinander drehfest verbundenen koaxialen Abschnitten. Der eine Abschnitt ist eine Schleifschnecke mit keramischer Bindung. Bei dem anderen Abschnitt handelt es sich ebenfalls um ein schneckenförmiges Werkzeug. Die Bindungsmatrix ist aus einem Polyurethanwerkstoff gebildet, und die Schleifkörner aus grünem Siliziumcarbid.

### Offenbarung der Erfindung

Aufgabe der Erfindung ist es, einen neuartigen Honring zu schaffen, der eine hohe Oberflächenqualität bei der Bearbeitung eines Werkstücks ermöglicht.

Die Aufgabe wird durch einen Honring gemäß dem Anspruch 1 gelöst. Vorteilhafte Ausführungsformen sind in den Unteransprüchen genannt.

Gemäß einem Aspekt der Erfindung wird ein Honring geschaffen zur Oberflächenbearbeitung von Verzahnungskonturen von Werkstücken, umfassend: einen ringförmigen Körper, der aus einer Polyurethan-Bindungsmatrix besteht, in die wenigstens ein Schleifmittel in Form von Korund, Zirkonkorund, Siliziumkarbid, kubischem Bornitrid oder Diamant oder einer Kombination von wenigstens zwei der Genannten eingebettet ist, wobei der ringförmige Körper an einer Innenmantelfläche eine Verzahnung zur Oberflächenbearbeitung von Verzahnungskonturen von Werkstücken aufweist, und wobei der ringförmige Körper eine in Kontakt mit einem Honring-Halter einer Werkzeugmaschine bringbare Außenmantelfläche aufweist. Das Schleifmittel kann als Schleifkorn bezeichnet werden. Das Werkstück kann insbesondere ein metallisches Werkstück sein und/oder die Verzahnungskonturen kann eine metallische Verzahnungskonturen sein.

Durch die Erfindung ist ein Honring zur Oberflächenbearbeitung von Werkstücken geschaffen, der einen ringförmigen Körper umfasst oder insbesondere aus dem ringförmigen Körper bestehen kann. Der ringförmige Körper besteht im Wesentlichen aus einer Polyurethan-Bindungsmatrix. In die Polyurethan-Bindungsmatrix ist wenigstens ein Schleifmittel in Form von Korund, Zirkonkorund, Siliziumkarbid, kubischem Bornitrid oder Diamant eingebettet. In die Polyurethan-Bindungsmatrix kann auch eine Kombination von wenigstens zwei der genannten Schleifmittel eingebettet sein. An einer Innenmantelfläche des ringförmigen Körpers ist eine Verzahnung ausgebildet. Die Verzahnung ist zur Oberflächenbearbeitung von Verzahnungskonturen der Werkstücke eingerichtet. Der ringförmige Körper weist eine Außenmantelfläche auf, die zum Inkontaktbringen mit einem Honring-Halter einer Werkzeugmaschine eingerichtet ist. Insbesondere kann der ringförmige Körper eine reine Polyurethan-Bindungsmatrix und das wenigstens eine Schleifmittel umfassen oder daraus bestehen. Der Honring kann insbesondere ein Honring in Form des ringförmigen Körpers sein. D.h., der Honring kann aus der Bindungsmatrix und dem Schleifmittel/Schleifkorn bestehen.

Der Honring zeichnet sich dadurch aus, dass aufgrund des ringförmigen Körpers, der die Innenmantelfläche mit Verzahnung und die Außenmantelfläche umfasst und das in der Polyurethan-Bindungsmatrix eingebettete wenigstens einem Schleifmittel umfasst, mehrschichtige Verbundsysteme, insbesondere ein Keramik-Keramik-Verbund oder ein Keramik-Polymer-Verbund, vermieden werden können.

Zugleich wird durch die Polyurethan-Bindungsmatrix des ringförmigen Körpers ein vorteilhaftes Dämpfungsverhalten des Honrings erreicht. Es kann ein vorteilhaftes Dämpfungsverhalten durch den Schleif- bzw. Polierbelag (das Schleifmittel) bereitgestellt werden.

Aufgrund der leicht elastischen Polyurethan-Bindungsmatrix lassen sich höhere Oberflächenqualitäten der zu bearbeitenden Werkstücke (Bauteile) im Vergleich zu keramischen Werkzeugen oder herkömmlichen mehrschichtigen Verbundsystemen mit einem ringförmigen Körper aus Keramik erzielen. Dadurch können beispielsweise die hohen Anforderungen an die Oberflächenqualitäten von Getriebeteilen für E-Fahrzeuge erfüllt werden. Im Vergleich zu keramischen Honringen kann außerdem durch die Polyurethan-Bindungsmatrix ein vorteilhaftes, insbesondere geringeres, Gewicht ermöglich werden.

Beispielsweise kann die Polyurethan-Bindungsmatrix erhalten sein aus einer Polyurethanzusammensetzung, die wenigstens eine Polyol-Komponente und wenigstens eine Isocyanat-Komponente und zumindest ein Additiv umfasst. Die Polyurethan-Bindungsmatrix bzw. die Polyurethanzusammensetzung kann somit gängige Polyurethansysteme umfassen, bestehend aus wenigstens einer Polyol-Komponente und wenigstens einer Isocyanat-Komponente.

In Ausführungsformen liegt der Anteil der Polyurethan-Bindungsmatrix an der Gesamtmasse des ringförmigen Körpers bzw. des Honrings in einem Bereich von 20 bis 95 Massenprozent (mas.%).

Die Polyurethan-Bindungsmatrix kann neben dem Schleifmittel - abhängig von den Einsatzbedingungen - auch mit weiteren Additiven versetzt sein. Diese Additive können aus typischen Polymer-Additiven bestehen (z.B. Verarbeitungs- und Temperaturstabilisatoren) und können auch verstärkende Faserwerkstoffe enthalten.

Die Polyurethan-Bindungsmatrix kann eingefärbt sein, z.B. mittels kommerzieller Farbpasten für Polyurethanmaterialien. D.h., die Polyurethan-Bindungsmatrix bzw. die Polyurethanzusammensetzung kann wenigstens ein Farb-Additiv oder färbendes Additiv umfassen.

In Ausführungsformen ist die Polyurethan-Bindungsmatrix erhalten aus einer Polyurethanzusammensetzung, die wenigstens eine Polyol-Komponente und wenigstens eine Isocyanat-Komponente und zumindest ein Additiv umfasst. In Ausführungsformen liegt der Additivanteil an der Polyurethanzusammensetzung in einem Bereich von 2 bis 75 Massenprozent.

Das zumindest eine Additiv kann beispielsweise wenigstens einen Füllstoff umfassen, insbesondere einen oder mehrere gängige Füllstoffe für Polyurethansysteme wie z.B. Calciumsilikate, Aluminosilikate, Aluminiumoxide, Aluminiumhydroxide oder andere keramische Oxide oder Kombinationen von wenigstens zweien davon.

In Ausführungsformen enthält die Polyurethan-Bindungsmatrix zumindest einen Faserwerkstoff. Der zumindest eine Faserwerkstoff kann zumindest eines von Glasfasern, Kohlenstofffasern, Keramikfasern, Metallfasern, Polymerfasern (z.B. Aramide) und/oder Naturfasern (z.B. Cellulose) umfassen.

In Ausführungsformen umfasst der zumindest ein Faserwerkstoff zumindest einen Faserwerkstoff in Form von Fasern mit einer Länge (oder einer durchschnittlichen Länge) von mehr als 10 mm und/oder Fasern mit einer Länge (oder einer durchschnittlichen Länge) von 10 mm oder weniger. Der zumindest ein Faserwerkstoff kann einen Faserwerkstoff in Form von Kurzfasern mit einer Länge von mehr als 10 mm umfassen. Als Kurzfasern werden Fasern, insbesondere Naturfasern, bezeichnet, die eine durchschnittliche Länge etwa im Bereich von 40 mm bis 100 mm haben, jedoch eine Länge von mehr als 10 mm haben. Der zumindest ein Faserwerkstoff kann einen Faserwerkstoff in Form von Ultrakurzfasern mit einer Länge von 10 mm oder weniger umfassen. Als Ultrakurzfasern werden hier Fasern bezeichnet, die eine Länge von 10 mm oder weniger haben. In Ausführungsformen umfasst der zumindest ein Faserwerkstoff zumindest einen Faserwerkstoff in Form von Fasern, die ungeordnet oder wirr in der Polyurethan-Bindungsmatrix angeordnet oder eingearbeitet sind. Dies kann insbesondere Fasern mit einer Länge (oder einer durchschnittlichen Länge) von mehr als 10 mm und/oder Fasern mit einer Länge (oder einer durchschnittlichen Länge) von 10 mm oder weniger umfassen, insbesondere aus den oben genannten Materialien wie Glasfasern, Kohlenstofffasern, Keramikfasern, Metallfasern, Polymerfasern (z.B. Aramide) und/oder Naturfasern (z.B. Cellulose).

In Ausführungsformen umfasst der zumindest ein Faserwerkstoff zumindest einen Faserwerkstoff in Form in Form eines Faserverbunds, beispielsweise eines Endlos-Verbunds und/oder Langfaser-Verbunds und/oder eines Endlos- und Langfaser-Verbunds. Der Faserverbund kann beispielsweise ein Gewebe, ein Gelege, ein Geflecht, ein Gestrick, usw., und/oder Kombinationen der genannten umfassen. Ein Faserwerkstoff in Form eines Faserverbunds kann beispielsweise belastungsgerecht eingearbeitet sein.

In Ausführungsformen liegt der Anteil des zumindest einen Faserwerkstoffs der Polyurethan-Bindungsmatrix an dem Volumen der Polyurethan-Bindungsmatrix im Bereich von 0,5 bis 60 Volumenprozent (vol.%).

In Ausführungsformen weist der ringförmige Körper bzw. der Honring eine Porosität auf, insbesondere eine Porosität im Bereich von 0,5 bis 60 Volumenprozent, besonders bevorzugt im Bereich von 1,0 bis 20 Volumenprozent. Die Porosität kann beispielsweise individuell auf die Anforderungen in Bezug auf ein zu verarbeitendes Werkstück angepasst werden. Über die Einstellung eines porösen Werkzeuggefüges (Gefüges des ringförmigen Körpers) lassen sich zudem ein erhöhter Zerspanungsraum gewinnen und die Materialabtragsraten steigern. Das reduzierte Gewicht gegenüber keramischen Systemen ist ein weiterer Vorteil.

In Ausführungsformen weist der ringförmige Körper bzw. der Honring eine Dichte im Bereich von 1,0 bis 9,0 g/cm³ auf, vorzugsweise im Bereich von 1,2 bis 4,0 g/cm³. Die Dichte kann beispielsweise individuell auf die Anforderungen in Bezug auf ein zu verarbeitendes Werkstück angepasst werden. Bei der Bestimmung der Dichte als Masse pro Volumen geht ein etwaiges Porenvolumen aufgrund von Porosität in das Volumen ein, d.h. bei vorhandener Porosität unterscheidet sich die Dichte von der Reindichte des ringförmigen Körpers.

In Ausführungsformen weist die Polyurethan-Bindungsmatrix einen Elastizitätsmodul in einem Bereich von 1,0 bis 15 GPa auf, vorzugsweise zwischen 4,0 und 12 GPa. Der Elastizitätsmodul kann beispielsweise individuell auf die Anforderungen in Bezug auf ein zu verarbeitendes Werkstück angepasst werden.

Die Polyurethan-Bindungsmatrix kann beispielsweise durch Beimischen von Additiven individuell, insbesondere in Bezug auf Porosität, Elastizität und Dichte, auf die Anforderungen in Bezug auf ein zu verarbeitendes Werkstück angepasst werden.

Der Honring wird nach dem Verfahren gemäss Anspruch 12 hergestellt.

Erfindungsgemäß wird ein Verfahren zur Herstellung des Honrings geschaffen, umfassend: Mischen von Rohstoffen der Polyurethan-Bindungsmatrix mit dem wenigstens einen Schleifmittel in Form von Korund, Zirkonkorund, Siliziumkarbid, kubischem Bornitrid oder Diamant oder einer Kombination von wenigstens zwei der Genannten; Gießen eines Honring-Rohlings aus dem durch das Mischen erhaltenen Gemisch; Aushärten (bzw. Aushärtenlassen) des Honring-Rohlings; mechanisches Konditionieren des Honring-Rohlings, um den Honring in Form des ringförmigen Körpers zu erhalten. Das Verfahren ist ein Verfahren zur Herstellung eines Honrings der oben beschriebenen Art. Die Rohstoffe der Polyurethan-Bindungsmatrix können insbesondere eine Polyurethanzusammensetzung umfassen.

In Ausführungsformen können die Rohstoffe der Polyurethan-Bindungsmatrix oder kann die Polyurethanzusammensetzung wenigstens eine Polyol-Komponente und wenigstens eine Isocyanat-Komponente umfassen. Beispielsweise können die Rohstoffe der Polyurethan-Bindungsmatrix oder kann die Polyurethanzusammensetzung wenigstens eine Polyol-Komponente und wenigstens eine Isocyanat-Komponente und zumindest ein Additiv umfassen. Die Rohstoffe der Polyurethan-Bindungsmatrix oder die Polyurethanzusammensetzung können als Additiv Hohlkugeln oder dergleichen zur Einstellung der Porosität des erhaltenen ringförmigen Körpers umfassen. Die Rohstoffe der Polyurethan-Bindungsmatrix oder die Polyurethanzusammensetzung können wenigstens ein Farb-Additiv oder färbendes Additiv umfassen. Die Rohstoffe der Polyurethan-Bindungsmatrix oder die Polyurethanzusammensetzung können wenigstens einen Füllstoff umfassen, insbesondere der oben beschriebenen Arten.

Das Mischen kann in einer Mischkammer erfolgen, und/oder das Gießen kann in einer Gießform erfolgen. Die Rohstoffe werden der Mischkammer zugeführt. Das Mischen kann beispielsweise mittels einer Extruderschnecke erfolgen. Um das Schleifmittel mit der Polyurethan-Bindungsmatrix zu verbinden und/oder zu verarbeiten, können auch andere gängige Verfahren (Mischtechniken) verwendet werden. Das Mischen kann ein Homogenisieren des Gemischs umfassen. Das Gemisch kann über wenigstens ein Vergussrohr in die Gießform laufen bzw. gegossen werden.

Beim Mischen von Rohstoffen der Polyurethan-Bindungsmatrix mit dem wenigstens einen Schleifmittel wird ein Gemisch erzeugt, insbesondere ein Bindungs-Abrasiv-Gemisch. Aus dem (Bindungs-Abrasiv-)Gemisch wird schließlich ein Halbzeug (Rohling) vergossen. Das Halbzeug / der Rohling kann von hochdicht bis hochporös ausgeführt werden. Dazu können beispielsweise bekannte Gießverfahren zur Herstellung von Feinschleif- und Polierwerkzeugen aus Polyurethan oder Epoxidharzen verwendet werden. Vorzugsweise wird ein Vakuum-gestütztes Gießverfahren genutzt, wodurch sich sowohl hochdichte als auch definiert homogene und definiert poröse Halbzeuge fertigen lassen. Als finaler Fertigungsschritt erfolgt eine mechanische Konditionierung (Einstellung der Endmaße bzw. Profilierung) des Halbzeugs.

Das Mischen von Rohstoffen der Polyurethan-Bindungsmatrix mit dem wenigstens einen Schleifmittel kann in einem einstufigen Mischverfahren erfolgen oder in einem zweistufigen Mischverfahren erfolgen, bei dem in einer erste Stufe beispielsweise nur ein Teil der wenigstens einen Polyol-Komponente mit der wenigstens einen Isocyanat-Komponente gemischt wird.

In Ausführungsformen erfolgt das Aushärten des Honring-Rohlings bei Raumtemperatur. Das Aushärten des Honring-Rohlings kann bei Raumtemperatur und ohne anschließende Temperung erfolgen. Nach dem Verguss und während des Aushärtungsprozesses der Masse tritt ein Schrumpfprozess auf. Dieser Prozess ist bedingt durch die einsetzende Materialvernetzung und kann durch entsprechende Gießformauslegung berücksichtigt werden.

In Ausführungsformen umfasst das mechanische Konditionieren ein Einstellen der Endmaße des Honrings und/oder ein Einbringen oder Nacharbeiten der Verzahnung an der Innenmantelfläche des ringförmigen Körpers des Honrings.

Das mechanische Konditionieren des Honring-Rohlings kann ein Anpassen des Außendurchmessers und/oder des Innendurchmessers und/oder eines Dickenmaßes (in radialer Richtung) und/oder eines Breitenmaßes (in der Richtung quer zum Durchmesser) umfassen. Das mechanische Konditionieren des Honring-Rohlings kann das Einbringen oder Nacharbeiten der Verzahnung auf der Innenmantelfläche des Honring-Rohlings umfassen. Die Verzahnungsart kann beliebig gewählt sein. Die Form der Verzahnung kann an die Verzahnungstiefe des Werkstücks angepasst sein. Das Dickenmaß und/oder das Breitenmaß kann an ein Honwerkzeug angepasst sein, insbesondere an einen Honring-Halter einer Werkzeugmaschine.

Die Rohstoffe der Polyurethan-Bindungsmatrix oder die Polyurethanzusammensetzung können zumindest einen Faserwerkstoff umfassen. In Ausführungsformen umfassen die Rohstoffe der Polyurethan-Bindungsmatrix, die in dem Schritt des Mischens gemischt werden, zumindest einen Faserwerkstoff in Form von Fasern mit einer Länge von mehr als 10 mm und/oder Fasern mit einer Länge von 10 mm oder weniger, und/oder das Verfahren umfasst: Einbringen zumindest eines Faserwerkstoffs in Form eines Faserverbunds in eine Gießform für den Honring-Rohling vor dem Gießen des Honring-Rohlings.

In Ausführungsformen wird in dem Schritt des Mischens zumindest ein Faserwerkstoff mit anderen Rohstoffen der Polyurethan-Bindungsmatrix und mit dem wenigstens einen Schleifmittel gemischt. In Ausführungsformen umfasst dieser zumindest eine Faserwerkstoff zumindest einen Faserwerkstoff in Form von Fasern mit einer Länge (oder einer durchschnittlichen Länge) von mehr als 10 mm und/oder Fasern mit einer Länge (oder einer durchschnittlichen Länge) von 10 mm oder weniger. Der zumindest ein Faserwerkstoff kann einen Faserwerkstoff in Form von Kurzfasern mit einer Länge von mehr als 10 mm umfassen. Der zumindest ein Faserwerkstoff kann einen Faserwerkstoff in Form von Ultrakurzfasern mit einer Länge von 10 mm oder weniger umfassen. Durch das Mischen sind im erhaltenen Honring die Fasern ungeordnet oder wirr in der Polyurethan-Bindungsmatrix angeordnet oder eingearbeitet sein. Dies kann insbesondere Fasern mit einer Länge (oder einer durchschnittlichen Länge) von mehr als 10 mm und/oder Fasern mit einer Länge (oder einer durchschnittlichen Länge) von 10 mm oder weniger umfassen, insbesondere aus den oben genannten Materialien wie Glasfasern, Kohlenstofffasern, Keramikfasern, Metallfasern, Polymerfasern (z.B. Aramide) und/oder Naturfasern (z.B. Cellulose).

In Ausführungsformen umfasst das Verfahren: Platzieren (Einbringen) zumindest eines Faserwerkstoffs in Form in Form eines Faserverbunds in einer Gießform, vor dem Schritt des Gießens des Honring-Rohlings. Das Gießen erfolgt dann in der Gießform. Der Faserverbund kann beispielsweise ein Endlos-Verbund und/oder Langfaser-Verbund und/oder ein Endlos- und Langfaser-Verbund sein. Der Faserverbund kann beispielsweise ein Gewebe, ein Gelege, ein Geflecht, ein Gestrick, usw., und/oder Kombinationen der genannten umfassen. Ein oder mehrere Faserverbunde können beispielsweise schicht- oder lagenweise in der Gießform platziert werden. Ein Faserwerkstoff in Form eines Faserverbunds kann beispielsweise belastungsgerecht in der Gießform platziert werden.

In Ausführungsformen liegt der Anteil des zumindest einen Faserwerkstoffs der Polyurethan-Bindungsmatrix an dem Volumen der Polyurethan-Bindungsmatrix des Honrings im Bereich von 0,5 bis 60 Volumenprozent (vol.%).

In Ausführungsformen wird das Gießen durch ein Unterdruck-gestütztes Gießverfahren durchgeführt. Ein Unterdruck-gestütztes Gießverfahren kann auch als Vakuum-gestütztes Gießverfahren bezeichnet werden, wobei Vakuum hier ein Grobvakuum sein kann. Das Mischen kann in einer Mischkammer unter Unterdruck erfolgen, und/oder das Gießen kann in einer/der Gießform unter Unterdruck erfolgen. Als Unterdruck wird hier der (absolute) Druck (d.h. der Luftdruck) in der Mischkammer bzw. in der Gießform bezeichnet. In Ausführungsformen beträgt der Unterdruck mindestens 100 mbar. Der Unterdruck kann insbesondere in einem Bereich zwischen 100 mbar und Umgebungsdruck liegen. Vorzugsweise liegt der Unterdruck in einem Bereich zwischen 200 bis 400 mbar. Die Rohstoffe werden der Mischkammer zugeführt. Das Mischen kann beispielsweise mittels einer Extruderschnecke erfolgen. Um das Schleifmittel mit der Polyurethan-Bindungsmatrix zu verbinden und/oder zu verarbeiten, können auch andere gängige Verfahren (Mischtechniken) verwendet werden. Das Mischen kann ein Homogenisieren des Gemischs umfassen. Das Gemisch kann über wenigstens ein Vergussrohr in die Gießform laufen bzw. gegossen werden. Durch das Unterdruck-gestützte Gießverfahren mit Mischen und Gießen unter Unterdruck kann eine extrem hohe Homogenität der Gesamtmasse erzeugt werden, und somit eine extrem hohe Homogenität des ringförmigen Körpers des Honrings.

Das Verfahren kann umfassen: Herstellen oder Einstellen einer Porosität des erhaltenen Honrings durch Einstellen des Unterdrucks.

In Ausführungsformen weist der ringförmige Körper bzw. der Honring eine Porosität auf, insbesondere eine Porosität im Bereich von 0,5 bis 60 Volumenprozent, besonders bevorzugt im Bereich von 1,0 bis 20 Volumenprozent. In Ausführungsformen weist der ringförmige Körper bzw. der Honring eine Dichte im Bereich von 1,0 bis 9,0 g/cm³ auf, vorzugsweise im Bereich von 1,2 bis 4,0 g/cm³. Die Dichte kann über die gewählte Rohstoffkombination eingestellt und definiert werden. Maßgeblich ist hierbei das gewählte Schleifkorn und die eingesetzte Polyurethan-Bindungsmatrix. Die Porosität kann über die Mischkammerbedingungen (Unterdruckbereiche, beispielsweise mittels Vakuumeinheit oder Gaszuführung eingestellt) und/oder eingesetzte Additive (Hohlkugeln oder ähnliches) eingestellt werden.

### Kurzbeschreibung der Zeichnungen

Ausführungsformen der Erfindung werden im Folgenden anfand der Zeichnungen näher erläutert. Es zeigen:
- Fig. 1: eine schematische perspektivische Darstellung eines Honrings gemäß einer Ausführungsform;
- Fig. 2: eine schematische Darstellung eines Verfahrens zur Herstellung eines Honrings gemäß einer Ausführungsform.

### Detaillierte Beschreibung von Ausführungsformen

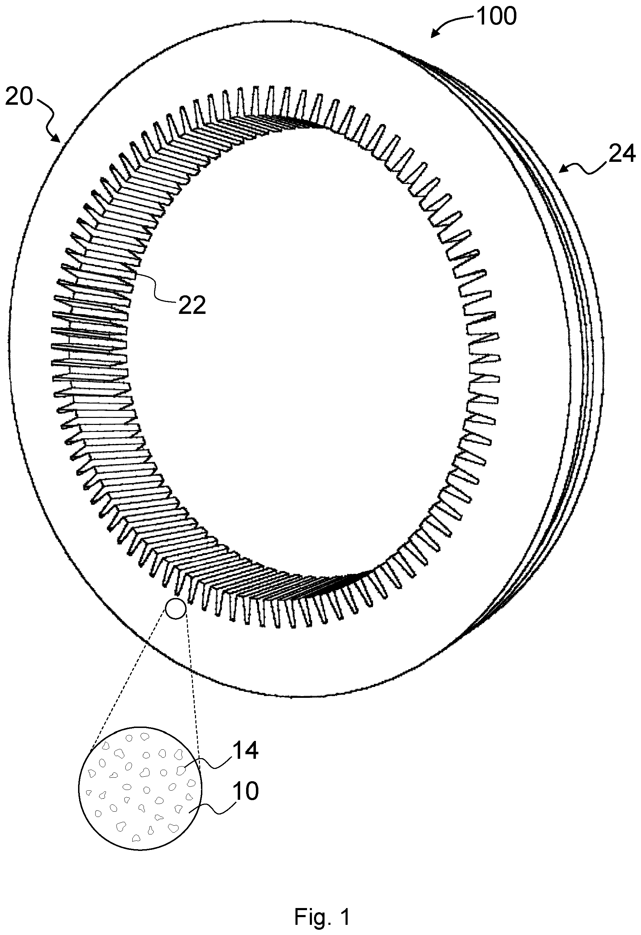

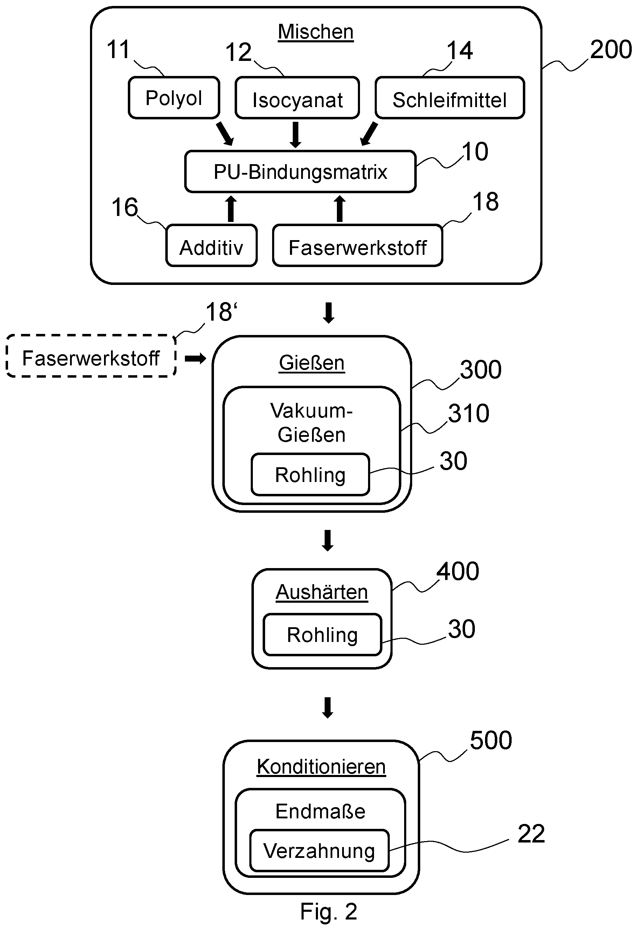

Der in Fig. 1 dargestellte Honring zur Oberflächenbearbeitung von Werkstücken besteht aus einem ringförmigen Körper 20, der aus einer Polyurethan-Bindungsmatrix 10 mit eingebettetem Schleifmittel 14 besteht und kann durch das Verfahren nach Fig. 2 hergestellt sein. In die Polyurethan-Bindungsmatrix 10 ist wenigstens ein Schleifmittel 14 in Form von Korund, Zirkonkorund, Siliziumkarbid, kubischem Bornitrid oder Diamant oder einer Kombination von wenigstens zwei der Genannten eingebettet. Die Polyurethan-Bindungsmatrix 10 ist erhalten aus einer Polyurethanzusammensetzung, die wenigstens eine Polyol-Komponente 11 und wenigstens eine Isocyanat-Komponente 12 umfasst. Die Polyurethanzusammensetzung der Polyurethan-Bindungsmatrix 10 umfasst wenigstens ein Additiv 16. Der Additivanteil liegt in einem Bereich von 2 bis 75 Massenprozent. Die Polyurethan-Bindungsmatrix 10 umfasst zumindest einen Faserwerkstoff 18, insbesondere Glasfasern, Kohlenstofffasern, Keramikfasern, Metallfasern, Polymerfasern (z.B. Aramide) und/oder Naturfasern (z.B. Cellulose). Der ringförmige Körper 20 weist an einer Innenmantelfläche eine Verzahnung 22 zur Oberflächenbearbeitung von Verzahnungskonturen der Werkstücke auf. Der ringförmige Körper 20 weist eine in Kontakt mit einem Honring-Halter einer Werkzeugmaschine bringbare Außenmantelfläche 24 auf. Die äußere Form des Honrings 100 entspricht einer zylindrischen Scheibe mit einer konzentrischen durchgehenden Öffnung, an deren Mantelfläche die Verzahnung 22 ausgebildet ist. Die Öffnung kann beispielsweise im Wesentlichen zylindrisch oder im Wesentlichen konusförmig sein. Der Honring 100 weist eine Porosität im Bereich von 1,0 bis 20 Volumenprozent auf. Der Honring 100 weist eine Dichte im Bereich von 1,2 bis 4,0 g/cm³ auf. Der Honring 100 weist eine Elastizität auf, insbesondere einen Elastizitätsmodul in einem Bereich von 4,0 bis 12 GPa.

Wie in Fig. 2 schematisch dargestellt, umfasst das Verfahren zum Herstellen des Honrings 100 ein Mischen 200 von Rohstoffen der Polyurethan-Bindungsmatrix 10 mit wenigstens einem Schleifmittel 14. Die Rohstoffe werden bei dem Mischen 200 in einer Mischkammer mittels einer Extruderschnecke vermischt. Das Mischen erfolgt unter einem Unterdruck, wobei die Mischkammer zur Einstellung des Unterdrucks evakuierbar ist, um die Homogenität der Mischung und des erhaltenen ringförmigen Körpers 20 zu erhöhen. Die Rohstoffe der Polyurethan-Bindungsmatrix 10 umfassen wenigstens ein Polyol 11 und wenigstens ein Isocyanat 12. Der Polyurethan-Bindungsmatrixanteil liegt in einem Bereich von 20 bis 95 Massenprozent der Gesamtmasse des Honrings 100. Das wenigstens eine Schleifmittel 14 ist Korund, Zirkonkorund, Siliziumkarbid, kubischem Bornitrid oder Diamant oder eine Kombination von wenigstens zwei der Genannten. Die Polyurethan-Bindungsmatrix 10 umfasst zumindest ein Additiv 16, bzw. die Rohstoffe der Polyurethan-Bindungsmatrix 10 umfassen das zumindest eine Additiv 16. Der Additivanteil 16 liegt in einem Bereich von 2 bis 75 Massenprozent. Die Polyurethan-Bindungsmatrix 10 kann zumindest einen Faserwerkstoff 18 enthalten. Durch das zumindest eine Schleifmittel 14 und die Polyurethan-Bindungsmatrix 10 wird die Dichte des Honrings bestimmt. Die Dichte liegt beispielsweise im Bereich von 1,2 bis 4,0 g/cm³ Durch den Unterdruck in der Mischkammer und das zumindest eine Additiv 16 wird die Porosität des Honrings 100 eingestellt. Die Porosität des Honrings liegt beispielsweise in einem Bereich von 1,0 bis 20 Volumenprozent.

Das Mischen kann in einer Gießanlage erfolgen, die beispielsweise diverse Support-Führungen (Schläuche und/oder Kanäle), eine Pumpeneinheit (zur Erzeugung des Vakuums bzw. Unterdrucks), eine Mischkammer sowie eine Ausfuhreinheit (Vergussrohr) zur Gießform umfasst. Die Rohstoffe werden über die Support-Führungen der Mischkammer zugeführt. In der Mischkammer dreht eine Extruderschnecke, die alle Komponenten miteinander vermischt.

Im nächsten Schritt des Verfahrens erfolgt ein Gießen 300 eines Honring-Rohlings 30 aus dem durch das Mischen 200 erhaltenen Gemisch. Vor dem Gießen 300 können in einer Variante des Verfahrens Endlos- und/oder Langfaser-Verbunde als Faserwerkstoff 18' in der Gießform angeordnet werden, insbesondere schicht- und/oder lagenweise eingebracht werden, zusätzlich zu oder anstelle des wenigstens einen Faserwerkstoffs 18. Die homogenisiert gemischten Rohstoffe werden über ein Vergussrohr der Gießform zugeführt. Das Gießen 300 erfolgt unter einem Unterdruck. Der Unterdruck liegt in einem Bereich zwischen 100 mbar und Umgebungsdruck, insbesondere in einem Bereich zwischen 200 und 400 mbar.

Im nächsten Schritt des Verfahrens erfolgt ein Aushärten 400 des Honring-Rohlings 30. Das Aushärten 400 des Honring-Rohlings 30 erfolgt bei Raumtemperatur ohne ein Tempern des Honring-Rohlings 30 nach Abschluss des Aushärtens 400.

Im letzten Schritt erfolgt ein mechanisches Konditionieren 500 des Honring-Rohlings 30, um den Honring 100 zu erhalten. Das mechanische Konditionieren 500 umfasst ein Einstellen der Endmaße des Honrings 100. Das mechanische Konditionieren 500 umfasst ein Einbringen und/oder Nacharbeiten einer Verzahnung 22 an einer Innenmantelfläche des ringförmigen Körpers 20 des Honrings 100.

## Patentansprüche

1. Honring (100) zur Oberflächenbearbeitung von Verzahnungskonturen von Werkstücken, umfassend:
einen ringförmigen Körper (20), der aus einer Polyurethan-Bindungsmatrix (10) besteht, in die wenigstens ein Schleifmittel (14) in Form von Korund, Zirkonkorund, Siliziumkarbid, kubischem Bornitrid oder Diamant oder einer Kombination von wenigstens zwei der Genannten eingebettet ist,
wobei der ringförmige Körper (20) an einer Innenmantelfläche eine Verzahnung (22) zur Oberflächenbearbeitung von Verzahnungskonturen von Werkstücken aufweist, und
wobei der ringförmige Körper (20) eine in Kontakt mit einem Honring-Halter einer Werkzeugmaschine bringbare Außenmantelfläche (24) aufweist.

2. Honring (100) nach Anspruch 1, wobei der Anteil der Polyurethan-Bindungsmatrix (10) an der Gesamtmasse des ringförmigen Körpers (20) in einem Bereich von 20 bis 95 Massenprozent liegt.

3. Honring (100) nach Anspruch 1 oder 2, wobei die Polyurethan-Bindungsmatrix (10) erhalten ist aus einer Polyurethanzusammensetzung, die wenigstens eine Polyol-Komponente (11) und wenigstens eine Isocyanat-Komponente (12) und zumindest ein Additiv (16) umfasst, wobei der Additivanteil an der Polyurethanzusammensetzung in einem Bereich von 2 bis 75 Massenprozent liegt.

4. Honring (100) nach Anspruch 1 bis 3, wobei die Polyurethan-Bindungsmatrix (10) zumindest einen Faserwerkstoff (18) enthält.

5. Honring (100) nach Anspruch 4, wobei der zumindest eine Faserwerkstoff (18) zumindest eines von Glasfasern, Kohlenstofffasern, Keramikfasern, Metallfasern, Polymerfasern und/oder Naturfasern umfasst.

6. Honring (100) nach Anspruch 4 oder 5, wobei der zumindest ein Faserwerkstoff (18) zumindest einen Faserwerkstoff in Form von Fasern mit einer Länge von mehr als 10 mm und/oder Fasern mit einer Länge von 10 mm oder weniger umfasst.

7. Honring (100) nach einem der Ansprüche 4 bis 6, wobei der zumindest ein Faserwerkstoff (18) zumindest einen Faserwerkstoff in Form in Form eines Faserverbunds umfasst.

8. Honring (100) nach einem der Ansprüche 4 bis 7, wobei der Anteil des zumindest einen Faserwerkstoffs (18) der Polyurethan-Bindungsmatrix (10) an dem Volumen der Polyurethan-Bindungsmatrix (10) im Bereich von 0,5 bis 60 Volumenprozent liegt.

9. Honring (100) nach einem der vorstehenden Ansprüche, wobei der ringförmige Körper (20) eine Porosität im Bereich von 0,5 bis 60 Volumenprozent aufweist.

10. Honring (100) nach einem der vorstehenden Ansprüche, wobei der ringförmige Körper (20) eine Dichte im Bereich von 1,0 bis 9,0 g/cm³ aufweist.

11. Honring (100) nach einem der vorstehenden Ansprüche, wobei die Polyurethan-Bindungsmatrix (10) einen Elastizitätsmodul in einem Bereich von 1,0 bis 15 GPa aufweist.

12. Verfahren zur Herstellung eines Honrings (100) nach einem der Ansprüche 1 bis 11, das Verfahren umfassend:
Mischen (200) von Rohstoffen der Polyurethan-Bindungsmatrix (10) mit dem wenigstens einen Schleifmittel (14) in Form von Korund, Zirkonkorund, Siliziumkarbid, kubischem Bornitrid oder Diamant oder einer Kombination von wenigstens zwei der Genannten;
Gießen (300) eines Honring-Rohlings (30) aus dem durch das Mischen (200) erhaltenen Gemisch;
Aushärten (400) des Honring-Rohlings (30);
mechanisches Konditionieren (500) des Honring-Rohlings (30), um den Honring (100) in Form des ringförmigen Körpers (20) zu erhalten.

13. Verfahren nach Anspruch 12, wobei das mechanische Konditionieren (500) ein Einstellen der Endmaße des Honrings (100) und/oder ein Einbringen oder Nacharbeiten der Verzahnung (22) an der Innenmantelfläche des ringförmigen Körpers (20) des Honrings (100) umfasst.

14. Verfahren nach Anspruch 12 oder 13, wobei die Rohstoffe der Polyurethan-Bindungsmatrix (10), die in dem Schritt des Mischens gemischt werden, zumindest einen Faserwerkstoff (18) in Form von Fasern mit einer Länge von mehr als 10 mm und/oder Fasern mit einer Länge von 10 mm oder weniger umfassen, und/oder wobei das Verfahren umfasst: Einbringen zumindest eines Faserwerkstoffs (18) in Form eines Faserverbunds in eine Gießform für den Honring-Rohling (30) vor dem Gießen (300) des Honring-Rohlings (30).

15. Verfahren nach einem der Ansprüche 12 bis 14, wobei das Gießen (300) durch ein Unterdruck-gestütztes Gießverfahren (310) durchgeführt wird.

## Claims

1. A honing ring (100) for surface machining of gear contours of workpieces, comprising:
an annular body (20) consisting of a polyurethane bonding matrix (10), in which at least one abrasive (14) in the form of corundum, zirconium corundum, silicon carbide, cubic boron nitride or diamond or a combination of at least two of the above is embedded,
wherein the annular body (20) has a toothing (22) on an inner surface for surface machining of toothing contours of workpieces, and
wherein the annular body (20) has an outer circumferential surface (24) which can be brought into contact with a honing ring holder of a machine tool.

2. The honing ring (100) according to claim 1, wherein the proportion of the polyurethane binding matrix (10) to the total mass of the annular body (20) is in a range of 20 to 95 mass percent.

3. The honing ring (100) according to claim 1 or 2, wherein the polyurethane binding matrix (10) is obtained from a polyurethane composition, comprising at least one polyol component (11) and at least one isocyanate component (12) and at least one additive (16), wherein the additive content of the polyurethane composition is in a range of 2 to 75 percent by mass.

4. The honing ring (100) according to claim 1 to 3, wherein the polyurethane binding matrix (10) contains at least one fibre material (18).

5. The honing ring (100) according to claim 4, wherein the at least one fibre material (18) comprises at least one of glass fibres, carbon fibres, ceramic fibres, metal fibres, polymer fibres and/or natural fibres.

6. The honing ring (100) according to claim 4 or 5, wherein the at least one fibre material (18) comprises at least one fibre material in the form of fibres with a length of more than 10 mm and/or fibres with a length of 10 mm or less.

7. The honing ring (100) according to any one of claims 4 to 6, wherein the at least one fibre material (18) comprises at least one fibre material in the form of a fibre composite.

8. The honing ring (100) according to any one of claims 4 to 7, wherein the proportion of the at least one fibre material (18) of the polyurethane binding matrix (10) to the volume of the polyurethane binding matrix (10) is in the range of 0.5 to 60 percent by volume.

9. The honing ring (100) according to any one of the preceding claims, wherein the annular body (20) has a porosity in the range of 0.5 to 60 volume percent.

10. The honing ring (100) according to any one of the preceding claims, wherein the annular body (20) has a density in the range of 1.0 to 9.0 g/cm³.

11. The honing ring (100) according to any one of the preceding claims, wherein the polyurethane binding matrix (10) has a modulus of elasticity in a range of 1.0 to 15 GPa.

12. A method for producing a honing ring (100) according to any one of claims 1 to 11, the method comprising:
mixing (200) raw materials of the polyurethane binding matrix (10) with the at least one abrasive (14) in the form of corundum, zirconium corundum, silicon carbide, cubic boron nitride or diamond or a combination of at least two of the above;
casting (300) a honing ring blank (30) from the mixture, obtained by mixing (200);
hardening (400) of the honing ring blank (30);
mechanical conditioning (500) of the honing ring blank (30) to obtain the honing ring (100) in the shape of the annular body (20).

13. The method according to claim 12, wherein the mechanical conditioning (500) comprises adjusting the final dimensions of the honing ring (100) and/or introducing or reworking the toothing (22) on the inner circumferential surface of the annular body (20) of the honing ring (100).

14. The method according to claim 12 or 13, wherein the raw materials of the polyurethane binding matrix (10), which are mixed in the mixing step, comprise at least one fibre material (18) in the form of fibres with a length of more than 10 mm and/or fibres with a length of 10 mm or less, and/or wherein the method comprises: introducing at least one fibre material (18) in the form of a fibre composite into a casting mould for the honing ring blank (30) before casting (300) the honing ring blank (30).

15. The method according to any one of claims 12 to 14, wherein the casting (300) is carried out by a vacuum-assisted casting process (310).

## Revendications

1. Bague de rodage (100) destinée à l'usinage de surface des contours de denture de pièces, comprenant :
un corps annulaire (20) qui est constitué d'une matrice de liaison au polyuréthane (10), dans laquelle au moins un abrasif (14) est incorporé sous forme de corindon, de corindon de zirconium, de carbure de silicium, de nitrure de bore cubique ou de diamant ou une combinaison d'au moins deux des éléments précités,
dans laquelle le corps annulaire (20) comporte, sur une surface latérale intérieure, une denture (22) pour l'usinage de surface des contours de denture de pièces, et
dans laquelle le corps annulaire (20) comporte une surface latérale extérieure (24) qui peut être mise en contact avec un porte-bague de rodage d'une machine-outil.

2. Bague de rodage (100) selon la revendication 1, dans laquelle la proportion de la matrice de liaison au polyuréthane (10) sur la masse totale du corps annulaire (20) est dans une plage de 20 à 95 pour-cent en masse.

3. Bague de rodage (100) selon la revendication 1 ou 2, dans laquelle la matrice de liaison au polyuréthane (10) est obtenue à partir d'une composition de polyuréthane qui comprend au moins un composant de polyol (11) et au moins un composant d'isocyanate (12) et au moins un additif (16), dans laquelle la proportion d'additif de la composition de polyuréthane est dans une plage de 2 à 75 pour-cent en masse.

4. Bague de rodage (100) selon les revendications 1 à 3, dans laquelle la matrice de liaison au polyuréthane (10) contient au moins un matériau fibreux (18).

5. Bague de rodage (100) selon la revendication 4, dans laquelle le au moins un matériau fibreux (18) comprend au moins un élément parmi des fibres de verre, des fibres de carbone, des fibres céramiques, des fibres métalliques, des fibres polymères et/ou des fibres naturelles.

6. Bague de rodage (100) selon la revendication 4 ou 5, dans laquelle le au moins un matériau fibreux (18) comprend au moins un matériau fibreux sous forme de fibres ayant une longueur de plus de 10 mm et/ou de fibres ayant une longueur de 10 mm ou moins.

7. Bague de rodage (100) selon l'une des revendications 4 à 6, dans laquelle le au moins un matériau fibreux (18) comprend au moins un matériau fibreux sous forme de sous forme de composite de fibres.

8. Bague de rodage (100) selon l'une des revendications 4 à 7, dans laquelle la proportion du au moins un matériau fibreux (18) de la matrice de liaison au polyuréthane (10) sur le volume de la matrice de liaison au polyuréthane (10) est dans la plage de 0,5 à 60 pour-cent en volume.

9. Bague de rodage (100) selon l'une des revendications précédentes, dans laquelle le corps annulaire (20) a une porosité dans la plage de 0,5 à 60 pour-cent en volume.

10. Bague de rodage (100) selon l'une des revendications précédentes, dans laquelle le corps annulaire (20) a une densité dans la plage de 1,0 à 9,0 g/cm³.

11. Bague de rodage (100) selon l'une des revendications précédentes, dans laquelle la matrice de liaison au polyuréthane (10) a un module d'élasticité dans une plage de 1,0 à 15 GPa.

12. Procédé de fabrication d'une bague de rodage (100) selon l'une des revendications 1 à 11, le procédé comprenant les étapes consistant à :
mélanger (200) des matières premières de la matrice de liaison au polyuréthane (10) avec le au moins un abrasif (14) sous forme de corindon, de corindon de zirconium, de carbure de silicium, de nitrure de bore cubique ou de diamant ou d'une combinaison d'au moins deux des éléments précités ;
mouler (300) une ébauche de bague de rodage (30) à partir du mélange obtenu par le mélange (200) ;
durcir (400) l'ébauche de bague de rodage (30) ;
conditionner mécaniquement (500) l'ébauche de bague de rodage (30) afin d'obtenir la bague de rodage (100) sous la forme du corps annulaire (20).

13. Procédé selon la revendication 12, dans lequel le conditionnement mécanique (500) comprend l'ajustement des dimensions finales de la bague de rodage (100) et/ou l'introduction ou le réusinage de la denture (22) sur la surface latérale intérieure du corps annulaire (20) de la bague de rodage (100).

14. Procédé selon la revendication 12 ou 13, dans lequel les matières premières de la matrice de liaison au polyuréthane (10) qui sont mélangées à l'étape du mélange, comprennent au moins un matériau fibreux (18) sous forme de fibres ayant une longueur de plus de 10 mm et/ou de fibres ayant une longueur de 10 mm ou moins, et/ou dans lequel le procédé comprend l'étape consistant à : introduire au moins un matériau fibreux (18) sous la forme d'un composite de fibres dans un moule pour l'ébauche de bague de rodage (30) avant la coulée (300) de l'ébauche de bague de rodage (30).

15. Procédé selon l'une des revendications 12 à 14, dans lequel la coulée (300) est réalisée par un procédé de coulée assisté par le vide (310).
